# EUROPEAN PATENT SPECIFICATION

(11) **EP 4 534 877 B1**
(45) Date of publication and mention of the grant of the patent: **04.11.2026**
(21) Application number: 23857000.6
(22) Date of filing: 07.07.2023
(51) Int. Cl.: F04B 9/02, F04B 15/06, F04B 17/03, B60L 50/72, F16K 1/38, F16K 15/02, F16K 15/04

(54) **DISCHARGE VALVE, BOOSTING PUMP, AND HYDROGEN DELIVERY SYSTEM**
AUSLASSVENTIL, VERSTÄRKERPUMPE UND WASSERSTOFFABGABESYSTEM
SOUPAPE DE DÉCHARGE, POMPE D'AMPLIFICATION ET SYSTÈME DE DISTRIBUTION D'HYDROGÈNE

(30) Priority: 24.08.2022 JP 2022133036
(43) Date of publication of application: 09.04.2025
(73) Proprietor: Mitsubishi Heavy Industries, Ltd., Tokyo 100-8332 (JP)
(72) Inventor: HARADA, Motoshi, Tokyo 100-8332 (JP); NAKAMICHI, Kenji, Tokyo 100-8332 (JP); KIHARA, Yuichi, Tokyo 100-8332 (JP); ASAI, Hideaki, Tokyo 100-8332 (JP); MITSUDA, Kimihiko, Tokyo 100-8332 (JP)
(74) Representative: Cabinet Beau de Loménie
(86) International application number: PCT/JP2023/025239
(87) International publication number: WO 2024/042883

(56) References cited:
- JP-A- 2004 092 712
- JP-A- 2007 303 406
- JP-A- 2010 043 708
- JP-A- 2010 190 279
- JP-A- 2010 190 279
- JP-B2- 4 031 807
- US-A- 5 178 184
- US-A1- 2015 369 228
- US-A1- 2017 037 824
- US-A1- 2018 010 588

## Description

### Field

The present disclosure relates to a discharge valve of a pressure boosting pump for boosting the pressure of low-temperature fluids such as liquid hydrogen, a pressure boosting pump having the discharge valve, and a hydrogen supply system having the pressure boosting pump. Background

Examples of conventional discharge valves of pressure boosting pumps include one described in Patent Literature 1 below. The discharge valve described in Patent Literature 1 includes a valve seat having an inflow hole and a discharge hole, a valve body that can freely open and close the inflow hole, a valve seat pressing member positioning the valve seat, and a spring member biasing the valve body against the valve seat to bias the valve body in the direction to close the inflow hole. According to this discharge valve, when the pressure of fluid acting on a compression chamber exceeds the sum of the pressures inside the discharge valve, the valve body starts moving to open the inflow hole, and the fluid having flowed in from the inflow hole can be discharged from the discharge hole.
Patent Literature 2 discloses a fluid intake/discharge valve body used for suction of a cryogenic liquefied gas into a cylinder liner and for discharge of the cryogenic liquefied gas by a piston.
Patent Literature 3 discloses a poppet check valve for a counterbalance valve of a brake valve used in a traveling unit, such as a hydraulic crawler vehicle.

### Citation List

### Patent Literature

Patent Literature 1: Japanese Patent No. 1041807
Patent Literature 2: US Patent No. 2015/369228A1
Patent Literature 3: Japanese Patent No. 2010190279A Summary

### Technical Problem

In conventional discharge valves, the spring member is disposed in a space part between the valve body and the valve seat pressing member. When the valve body retracts against the biasing force of the spring member by high-pressure fluid, the volume of the space part reduces and the pressure increases. The fluid in the space part then flows through the outside of the valve body to the discharge hole. In this process, the flow direction of the fluid from the space part to the discharge hole is opposite to the direction in which the valve body retracts, which unfortunately hinders the retracting movement of the valve body. In addition, when the flow of the fluid from the space part to the discharge hole is high speed, cavitation erosion may occur and damage the valve body.

The present disclosure solves the problems described above, and an object thereof is to provide a discharge valve, a pressure boosting pump, and a hydrogen supply system improving the operability of a valve body and preventing damage to the valve body.

### Solution to Problem

In order to achieve the above object, a discharge valve according to the present disclosure as defined in claim 1 includes: a casing with which a fluid inflow hole and a fluid discharge hole each communicate, the casing having a housing space part communicating with the fluid discharge hole; a valve seat disposed in the housing space part and having an inflow port communicating with the fluid inflow hole and a discharge port communicating with the fluid discharge hole; a valve body movably supported at a closing position to close the inflow port and an opening position to open the inflow port in the housing space part; and a first communicating part causing a disposing space part on an opposite side of the valve body in the housing space part from the inflow port and the fluid discharge hole to communicate with each other.

Further, a pressure boosting pump according to the present disclosure includes: a suction valve configured to cause a low-temperature fluid to be sucked into a compression chamber; a piston configured to compress the low-temperature fluid sucked from the suction valve into the compression chamber; and the above-described discharge valve configured to cause the low-temperature fluid compressed by the piston to be discharged.

Further, a hydrogen supply system according to the present disclosure includes: a compression device having the above-described pressure boosting pump configured to compress liquid hydrogen as a low-temperature fluid; an evaporation device configured to vaporize the liquid hydrogen compressed by the compression device; and a dispenser configured to supply hydrogen gas vaporized by the evaporation device.

### Advantageous Effects of Invention

The discharge valve, the pressure boosting pump, and the hydrogen supply system of the present disclosure can improve the operability of the valve body and prevent damage to the valve body.

### Brief Description of Drawings

FIG. 1 is a schematic diagram of an overall configuration of a hydrogen supply system of a first embodiment.
FIG. 2 is a schematic configuration diagram of a compression device.
FIG. 3 is a vertical sectional view of the main part of a pressure boosting pump including a discharge valve of the first embodiment.
FIG. 4 is a IV-IV sectional view of FIG. 3.
FIG. 5 is a vertical sectional view of an operating state of the pressure boosting pump.
FIG. 6 is a sectional view of the discharge valve of the first embodiment.
FIG. 7 is a sectional view of a discharge valve of a second embodiment.
FIG. 8 is a sectional view of a discharge valve of a third embodiment.
FIG. 9 is a sectional view of a discharge valve of a fourth embodiment.

### Description of Embodiments

The following describes a preferred embodiment of the present disclosure in detail with reference to the accompanying drawings. The present disclosure is not limited by this embodiment, and when there are a plurality of embodiments, combinations of the embodiments are also included. The components in the embodiment include ones that those skilled in the art can easily assume, substantially the same ones, and ones in what is called the range of equivalence.

### [First Embodiment]

### <Hydrogen Supply System>

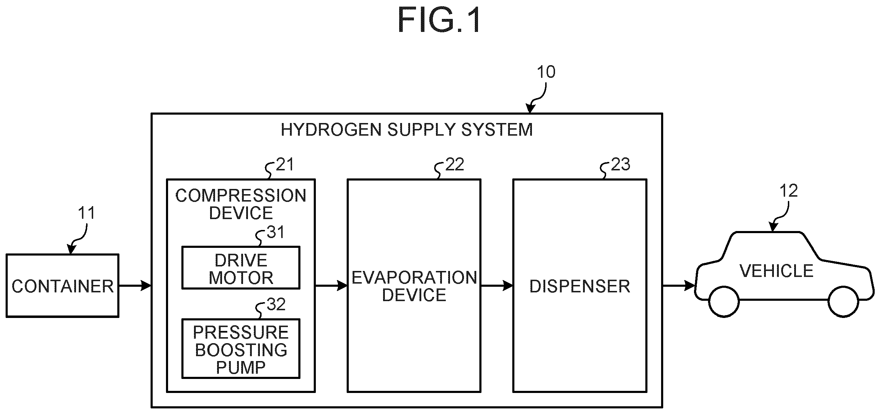

FIG. 1 is a schematic diagram of an overall configuration of a hydrogen supply system of a first embodiment.

As illustrated in FIG. 1, this hydrogen supply system 10 supplies (refills) liquid hydrogen stored in a container 11 as hydrogen gas at a certain pressure to a power source of a vehicle 12. The power source is, for example, a fuel cell, a hydrogen engine, or the like and is installed in the vehicle 12. The hydrogen supply system 10 is, for example, what is called a hydrogen station facility supplying (refilling) hydrogen gas as a fuel to the power source of the vehicle 12. However, the hydrogen supply system 10 is not limited to the one supplying hydrogen gas to the power source of the vehicle 12 but also compresses and supplies low-temperature fluids (for example, liquid hydrogen, liquid nitrogen, liquid oxygen, liquefied carbon dioxide gas, liquefied natural gas, liquefied propane gas, and the like).

The hydrogen supply system 10 has a compression device 21, an evaporation device 22, and a dispenser 23. The compression device 21 compresses liquid hydrogen (a low-temperature fluid) supplied from the container 11 to a certain high pressure (a high-pressure state) set in advance. The evaporation device 22 vaporizes the high-pressure liquid hydrogen compressed by the compression device 21 to generate hydrogen gas. The dispenser 23 fills the power source of the vehicle 12 with the hydrogen gas generated by the evaporation device 22.

The compression device 21 compresses the liquid hydrogen stored in the container 11 to a certain high pressure, but this is not limiting. For example, if the container 11 stores hydrogen gas, the compression device 21 may compress the hydrogen gas stored in the container 11 to a certain high pressure.

The compression device 21 has a drive motor 31 and a pressure boosting pump 32. The drive motor 31 is an electric motor that can be driven by externally supplied electric power. The number of revolutions of the drive motor 31 is controlled by an inverter (not illustrated). The drive motor 31 transmits rotational power to the pressure boosting pump 32. The pressure boosting pump 32 operates by the rotational power of the drive motor 31.

### <Compression Device>

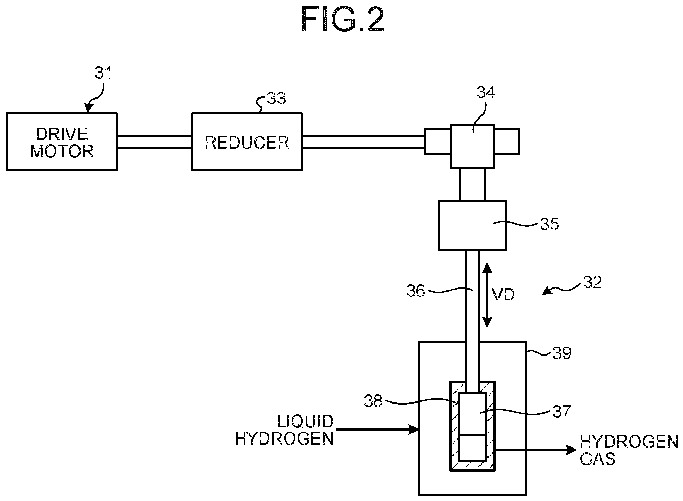

FIG. 2 is a schematic diagram of the compression device.

As illustrated in FIG. 2, the pressure boosting pump 32 is coupled to the drive motor 31 via a reducer 33. The reducer 33 reduces the rotational power of the drive motor 31 and transmits it to the pressure boosting pump 32. The pressure boosting pump 32 is a reciprocating pump. The pressure boosting pump 32 operates by converting the rotational power of the drive motor 31, which has been reduced by the reducer 33, into reciprocating power. The pressure boosting pump 32 alternately performs suction and compression (pressure boosting) of liquid hydrogen by reciprocating power to compress the sucked liquid hydrogen to a certain high-pressure state and discharges it to the outside.

The pressure boosting pump 32 has a crank mechanism 34, a crosshead 35, a piston rod 36, a piston 37, and a cylinder block 38.

The crank mechanism 34 converts the rotational power transmitted from the reducer 33 into linear reciprocating power and transmits it to the crosshead 35. The crosshead 35 reciprocates in a vertical direction VD by the reciprocating power in the vertical direction VD transmitted from the crank mechanism 34. The piston rod 36 is coupled to the crosshead 35 at its upper end, and the piston 37 is coupled to its other end. The cylinder block 38 has a hollow shape, and the piston 37 is movably supported along the vertical direction VD thereinside.

The lower part of the pressure boosting pump 32, that is, the cylinder block 38 is disposed inside a vessel 39. The vessel 39 is an adiabatic vacuum vessel, and its inside is maintained at a vacuum state together with the pressure boosting pump 32. The vessel 39 is supplied with liquid hydrogen thereinside and filled to an atmospheric-pressure state.

When the pressure boosting pump 32 is operated, first, at a suction step, at which the piston 37 ascends, the liquid hydrogen from the vessel 39 is sucked into the cylinder block 38. Next, at a compression step, at which the piston 37 descends, the liquid hydrogen inside the cylinder block 38 is compressed, and high-pressure liquid hydrogen is discharged to the outside of the vessel 39.

### <Configuration of the Pressure Boosting Pump>

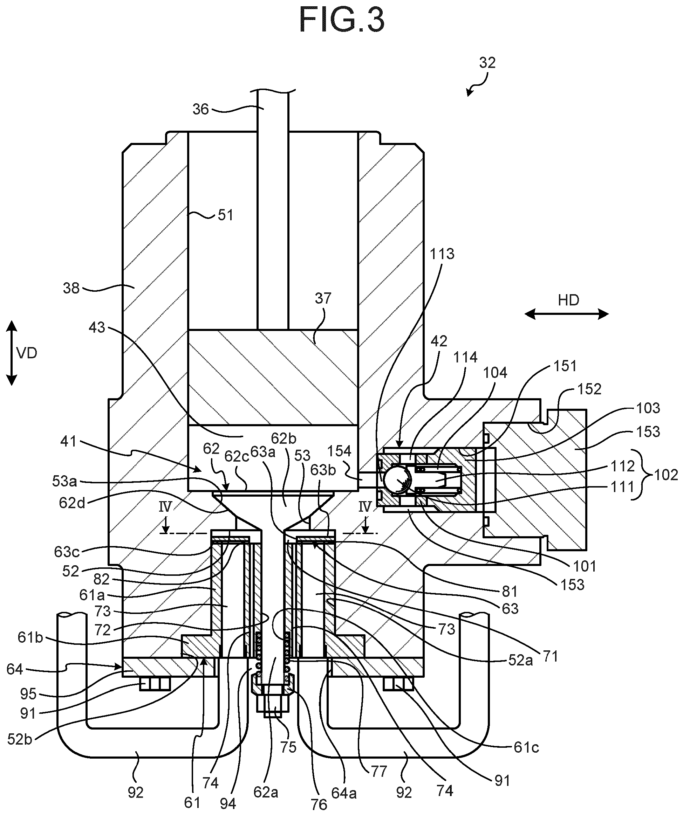

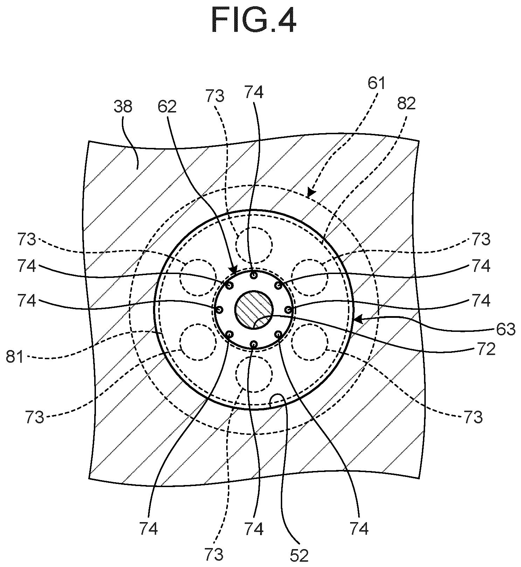

FIG. 3 is a vertical sectional view of the main part of the pressure boosting pump including the discharge valve of the first embodiment, and FIG. 4 is a IV-IV sectional view of FIG. 3.

As illustrated in FIG. 3, the pressure boosting pump 32 includes a suction valve 41 and a discharge valve 42. When opened, the suction valve 41 causes liquid hydrogen to be sucked into a compression chamber 43. When opened, the discharge valve 42 causes high-pressure liquid hydrogen compressed in the compression chamber 43 to be discharged to the outside.

The cylinder block 38 is disposed along the vertical direction VD. The cylinder block 38 is formed with a fitting hole 51 opening upward in its upper part and is formed with a recess 52 opening downward in its lower part. The fitting hole 51 and the recess 52 have a cylindrical shape and are caused to communicate with each other via a communicating hole 53, which also has a cylindrical shape. The piston 37 fits into the fitting hole 51 of the cylinder block 38 from above and is movably supported along the vertical direction VD. By the piston 37 fitting into the fitting hole 51 of the cylinder block 38, the compression chamber 43 sectioned by the piston 37 and the fitting hole 51 is formed. The fitting hole 51, the recess 52, the communicating hole 53, the piston 37, and the compression chamber 43 are disposed concentrically.

As illustrated in FIG. 3 and FIG. 4, the suction valve 41 is disposed in the recess 52 of the cylinder block 38. The suction valve 41 has a valve casing 61, a first valve body 62, a second valve body 63, and a pressing member 64.

The valve casing 61 has a convex cylindrical shape. The valve casing 61 has a small-diameter main body 61a and a flange part 61b larger in diameter than the main body 61a. The valve casing 61 is formed by the flange part 61b integrally provided in the lower part of the main body 61a. The recess 52 has a small-diameter hole 52a and a large-diameter hole 52b larger in diameter than the small-diameter hole 52a. The recess 52 is formed by the large-diameter hole 52b integrally provided in the lower part of the small-diameter hole 52a. In the valve casing 61, the main body 61a fits into the small-diameter hole 52a of the recess 52, and the flange part 61b fits into the large-diameter hole 52b of the recess 52. In this case, in the valve casing 61, the lower face of the flange part 61b is continuous with the lower face of the cylinder block 38 without any step. In the valve casing 61, the length of the main body 61a is shorter than the length of the small-diameter hole 52a, and thus the distal end face of the main body 61a and the bottom face of the small-diameter hole 52a face each other with a gap. Thus, a space part 71 is sectioned between the recess 52 of the cylinder block 38 and the valve casing 61.

The valve casing 61 is provided with a through hole 72 along the vertical direction VD in its central part. The valve casing 61 is provided with a plurality of (six in the present embodiment) suction holes 73 along the vertical direction VD closer to its outer periphery in a radial direction, spaced apart from each other in a circumferential direction. In addition, the valve casing 61 is provided with a plurality of (eight in this embodiment) discharge holes 74 along the vertical direction VD closer to the through hole 72 in the radial direction, spaced apart from each other in the circumferential direction. The suction holes 73 allow liquid hydrogen to be sucked from the outside into the space part 71. The discharge holes 74 discharge liquid hydrogen or hydrogen gas staying in the space part 71 to the outside. The outside is a portion that is outside the cylinder block 38, is inside the vessel 39 (refer to FIG. 2), and is filled with liquid hydrogen at a low-pressure state of about atmospheric pressure to 1 MPaG.

The first valve body 62 has a rod part 62a and a head part 62b. In the first valve body 62, the head part 62b is provided integrally with the upper end of the rod part 62a. The rod part 62a is disposed inside the valve casing 61 along the vertical direction VD. That is, in the first valve body 62, the rod part 62a fits into the through hole 72 of the valve casing 61 and is movably supported along an axial direction (the vertical direction VD). The head part 62b has a substantially conical trapezoidal shape expanding its diameter upward. In the first valve body 62, the flat top face of the head part 62b is a pressure receiving face 62c and the curved lower face of the head part 62b is a seat face 62d. In the first valve body 62, the pressure receiving face 62c faces the compression chamber 43.

In the cylinder block 38, the upper part of the communicating hole 53 expands its diameter upward to form a shape similar to that of the head part 62b and is provided with a valve seat 53a. In the first valve body 62, the head part 62b is disposed in the upper part of the communicating hole 53, and the seat face 62d can seat on the valve seat 53a. When the first valve body 62 moves downward and the seat face 62d of the head part 62b seats on the valve seat 53a, the first valve body 62 closes the communicating hole 53 to isolate the compression chamber 43 and the space part 71 from each other. On the other hand, when the first valve body 62 moves upward and the seat face 62d of the head part 62b separates from the valve seat 53a, the first valve body 62 opens the communicating hole 53 to cause the compression chamber 43 and the space part 71 to communicate with each other.

In the first valve body 62, the lower end of the rod part 62a protrudes below the valve casing 61. In the rod part 62a, a spring receiving member 76 is fixed to its lower end by a nut 75. A compression coil spring 77 as a biasing member is disposed between a spring receiving part 61c formed in the valve casing 61 and the spring receiving member 76 of the first valve body 62. The compression coil spring 77 biases the first valve body 62 downward against the valve casing 61. That is, the first valve body 62 is biased in the direction in which the seat face 62d of the head part 62b seats on the valve seat 53a of the communicating hole 53 by the biasing force of the compression coil spring 77 and is supported in a biased manner at a position to close the communicating hole 53 and to isolate the compression chamber 43 and the space part 71 from each other.

The second valve body 63 is a disk-shaped plate member and is provided with an opening part 63a in its central part. The second valve body 63 has an outer diameter approximately the same as the outer diameter of the valve casing 61 and an inner diameter larger than the diameter at the position at which the discharge holes 74 are formed. The second valve body 63 is disposed in the space part 71 sectioned between the recess 52 of the cylinder block 38 and the valve casing 61. The second valve body 63 is movably supported on the cylinder block 38 and the valve casing 61 along the vertical direction VD in the space part 71. Sealing members 81 and 82 formed in a ring shape are provided between the second valve body 63 and the main body 61a of the valve casing 61. The sealing member 81 is disposed closer to the outer periphery of the main body 61a, and the sealing member 82 is disposed closer to the inner periphery of the main body 61a. That is, the sealing members 81 and 82 are disposed on both sides of the main body 61a in the radial direction with the suction holes 73 interposed therebetween. In the second valve body 63, its upper face is a pressure receiving face 63b and its lower face is a seat face 63c in contact with the sealing members 81 and 82. In the second valve body 63, the pressure receiving face 63b faces the communicating hole 53. In the second valve body 63, when the seat face 63c seats on the sealing members 81 and 82, the space part 71 and the suction holes 73 are isolated from each other. On the other hand, in the second valve body 63, when the seat face 63c separates from the sealing members 81 and 82, the space part 71 and the suction holes 73 communicate with each other.

The pressing member 64 has a cylindrical shape. The pressing member 64 presses the valve casing 61 against the cylinder block 38. That is, the pressing member 64 is provided with a plurality of mounting holes (not illustrated) along the vertical direction VD, spaced from each other in the circumferential direction. In the pressing member 64, its upper face is in contact with the lower face of the cylinder block 38 and the lower face of the flange part 61b of the valve casing 61. In this state, a plurality of fastening bolts 91 are inserted from below into the respective mounting holes of the pressing member 64, and their tips are threadedly engaged with screw holes (not illustrated) of the cylinder block 38. By the pressing member 64 being fastened to the cylinder block 38, the valve casing 61 is pressed against the pressing member 64 while being disposed in the recess 52 and is supported on the cylinder block 38.

The pressing member 64 has an outer diameter approximately the same as the outer diameter of the cylinder block 38 and an inner diameter larger than the diameter of the position at which the suction holes 73 are formed. Thus, lower end openings of the suction holes 73 and lower end openings of the discharge holes 74 are exposed inside the pressing member 64. A plurality of suction tubes 92 are supported on the pressing member 64 via support members not illustrated. In the suction tubes 92, one ends are coupled to the lower end openings of the suction holes 73, and the other ends are extended upward and opens to the outside, that is, the inside of the vessel 39 (refer to FIG. 2).

The discharge valve 42 is a check valve and is disposed on the side of the cylinder block 38. The discharge valve 42 is housed in a housing hole (a housing space part) 151 formed in the cylinder block 38. The housing hole 151 is formed along the radial direction (a horizontal direction HD) orthogonal to the axial direction of the cylinder block 38 (the vertical direction VD). The housing hole 151 is formed with an opening part 152 opening to the outside on one side in the horizontal direction HD. The discharge valve 42 is positioned by being inserted from the opening part 152 into the housing hole 151, and the opening part 152 is closed by a closing member 153.

The cylinder block 38 is formed with an inflow hole 154 communicating with the compression chamber 43 on the other side of the discharge valve 42 in the horizontal direction HD and is formed with an annular channel 155 formed in a ring shape outside the discharge valve 42. A hydrogen gas discharge hole (not illustrated) communicates with the annular channel 155.

The discharge valve 42 has a valve seat 101, a valve body 102, a valve seat pressing member 103, and a compression coil spring (a biasing member) 104. The valve body 102 has a ball 111 and a support 112. The valve seat 101 has an inflow port 113 communicating with the inflow hole 154 and a discharge port 114 communicating with the annular channel 155. In the valve body 102, the ball 111 closes the inflow port 113 by the biasing force of the compression coil spring 104.

When high-pressure liquid hydrogen acts on the inflow port 113 through the inflow hole 154 from the compression chamber 43, the valve body 102 retracts against the biasing force of the compression coil spring 104 to open the inflow port 113. The liquid hydrogen in the compression chamber 43 then flows from the inflow hole 154 through the inflow port 113 to the inside of the discharge valve 42 and is discharged from the discharge port 114 into the annular channel 155.

### <Operation of Pressure Boosting Pump>

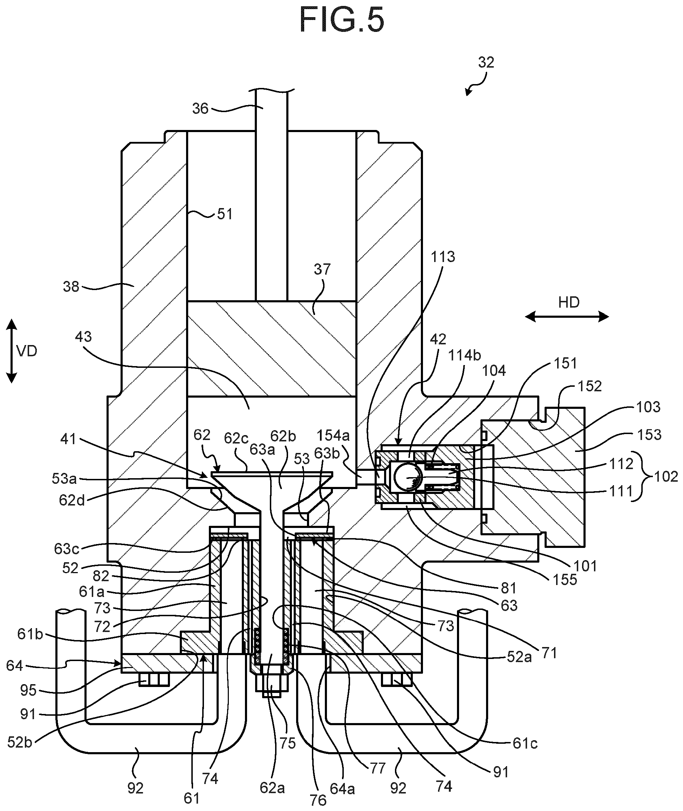

FIG. 5 is a vertical sectional view of an operating state of the pressure boosting pump.

As illustrated in FIG. 5, first, at the suction step of the pressure boosting pump 32, when the piston 37 moves (ascends) from the bottom dead center to the top dead center via the piston rod 36, the volume of the compression chamber 43 expands, and thereby the pressure in the compression chamber 43 becomes negative. In this process, the first valve body 62 moves upward due to its ascending force (suction force) overcoming the biasing force of the compression coil spring 77, and the seat face 62d of the head part 62b separates from the valve seat 53a. The first valve body 62 then opens the communicating hole 53, causing the compression chamber 43 and the space part 71 to communicate with each other. When the negative pressure in the compression chamber 43 acts on the second valve body 63 through the communicating hole 53, the second valve body 63 moves upward due to the negative pressure, and the seat face 63c separates from the sealing members 81 and 82. The second valve body 63 then causes the space part 71 and the suction holes 73 to communicate with each other. Thus, the suction valve 41 causes external liquid hydrogen to be sucked from the respective suction tubes 93 into the space part 71 through the respective suction holes 73 and to be further sucked into the compression chamber 43 through the communicating hole 53.

As illustrated in FIG. 3, next, at the compression step of the pressure boosting pump 32, when the piston 37 moves (descends) to the upper dead center or the lower dead center via the piston rod 36, the volume of the compression chamber 43 is reduced, and thereby the pressure in the compression chamber 43 becomes positive pressure. In this process, the first valve body 62 moves downward by the biasing force of the compression coil spring 77 because the suction force decreases, and the seat face 62d of the head part 62b seats on the valve seat 53a. The first valve body 62 then closes the communicating hole 53, isolating the compression chamber 43 and the space part 71 from each other. When the positive pressure in the compression chamber 43 acts on the second valve body 63 through the communicating hole 53, the second valve body 63 moves downward because the suction force decreases, and the seat face 63c seats on the sealing members 81 and 82. The second valve body 63 then isolates the space part 71 and the suction holes 73 from each other.

When the piston 37 further descends, the pressure in the compression chamber 43 becomes higher pressure because the volume of the compression chamber 43 is further reduced. In this process, when the pressure of the liquid hydrogen in the compression chamber 43 becomes a certain high pressure or higher, the pressure of the liquid hydrogen becomes higher than the biasing force of the compression coil spring 104, and the valve body 102 retracts to open the inflow port 113. The liquid hydrogen in the compression chamber 43 then flows from the inflow hole 154 through the inflow port 113 into the discharge valve 42, is discharged from the discharge port 114 into the annular channel 155, and is discharged through the discharge hole to the outside of the cylinder block 38.

At the compression step of the pressure boosting pump 32, while the first valve body 62 descends and the seat face 62d of the head part 62b seats on the valve seat 53a to close the communicating hole 53, part of the high-pressure liquid hydrogen in the compression chamber 43 leaks through the communicating hole 53 to the space part 71. The high-pressure liquid hydrogen having leaked to the space part 71 is discharged to the inside of the vessel 39 (refer to FIG. 2), which is at an atmospheric-pressure state, through the discharge holes 74.

### <Configuration of Discharge Valve>

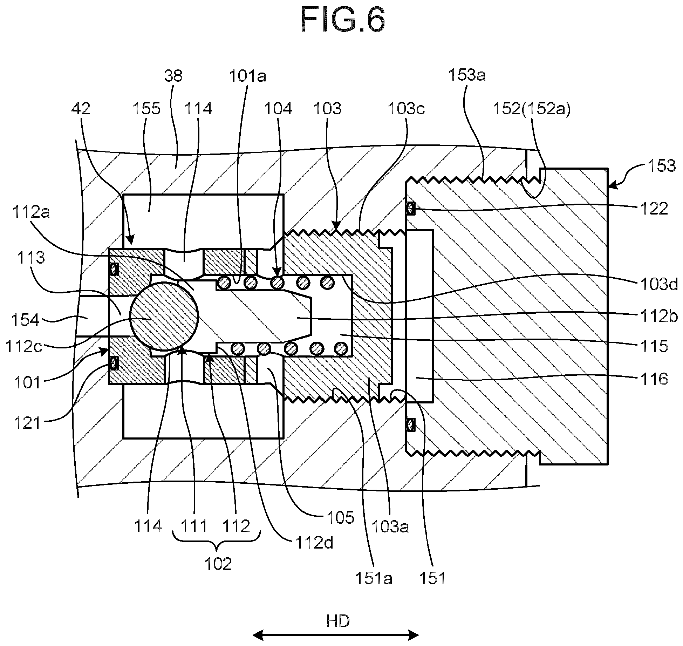

The following describes the discharge valve 42 in detail. FIG. 6 is a sectional view of the discharge valve of the first embodiment.

As illustrated in FIG. 5, the discharge valve 42 is provided in the housing hole 151 formed in the cylinder block (a casing) 38 and includes a first communicating hole (a first communicating part) 105 in addition to the valve seat 101, the valve body 102, the valve seat pressing member 103, and the compression coil spring 104.

The housing hole 151 has a cylindrical shape along the horizontal direction HD. The housing hole 151 is formed with the opening part 152 on one side in the horizontal direction HD (on the right in FIG. 5) and is closed by the closing member 153. The housing hole 151 is formed with the inflow hole 154 on the other side in the horizontal direction HD (on the left in FIG. 5). In addition, the housing hole 151 is formed with the annular channel 155 outside in the radial direction on the other side in the horizontal direction HD. The inflow hole 154 communicates with the compression chamber 43 (refer to FIG. 3), and the annular channel 155 communicates with the discharge hole (not illustrated).

The valve seat 101 has a cylindrical shape and is disposed on the other side of the housing hole 151 in the horizontal direction HD and inside the annular channel 155. The valve seat 101 is positioned in the axial direction and the radial direction by its end on the other side in the axial direction (the horizontal direction HD) coming into contact with the end face of the housing hole 151 and its outer peripheral face on the other side in the horizontal direction HD coming into contact with the inner peripheral face of the housing hole 151. The valve seat 101 is provided with a sealing member 121 formed in a ring shape at its end on the other side in the axial direction (the horizontal direction HD) and seals by coming into close contact with the end face of the housing hole 151 (the cylinder block 38).

The valve seat 101 is formed with a housing hole 101a along the axial direction, and the housing hole 101a opens to one side in the axial direction. The valve seat 101 is formed with the inflow port 113 on the other side in the axial direction and is formed with the discharge port 114 outside in the radial direction. The inflow port 113 is a hole formed along the axial direction at the central position of the valve seat 101. The inflow port 113 causes the inflow hole 154 and the housing hole 101a to communicate with each other. The discharge port 114 is a hole formed along the radial direction of the valve seat 101 and is provided spaced in the circumferential direction. The discharge port 114 causes the annular channel 155 and the housing hole 101a to communicate with each other.

The valve body 102 has the ball 111 and the support 112. The support 112 has a cylindrical shape and has a receiving part 112a and a rod part 112b. The receiving part 112a has a hemispherical receiving face 112c receiving the ball 111. The rod part 112b is integrally provided on an opposite side of the receiving part 112a from the receiving face 112c. The support 112 is formed with a step part 112d by the outer diameter of the rod part 112b having a smaller diameter than the outer diameter of the receiving part 112a. The ball 111 fits into the receiving face 112c of the support 112 to be integrated. The valve body 102 may have the ball 111 and the support 112 separately or integrally.

The valve body 102 is disposed in the housing hole 101a of the valve seat 101 and is movably supported in the axial direction. The valve body 102 is movable between a closing position closing the inflow port 113 of the valve seat 101 and an opening position opening the inflow port 113. The closing position of the valve body 102 is the position (the position represented in FIG. 5) at which the ball 111 seats in close contact with the periphery of the inflow port 113 of the valve seat 101. The opening position of the valve body 102 is the position (a position moved to the right from the position represented in FIG. 5) at which the ball 111 separates from the inflow port 113 of the valve seat 101.

The valve seat pressing member 103 has a cylindrical shape with one side in the axial direction closed. The valve seat pressing member 103 has a tubular part 103a, a partition part 103b, and a screw part 103c. The tubular part 103a is formed with a housing hole 103d along the axial direction. The tubular part 103a is integrally provided with the partition part 103b on one side in the axial direction, thereby closing the housing hole 103d, and the housing hole 103d is open on the other side in the axial direction. The screw part 103c is formed on the outer peripheral face of the tubular part 103a and is threadedly engaged with a screw part 151a formed on the inner peripheral face of the housing hole 151.

That is, the valve seat pressing member 103 is inserted into the housing hole 151 from the opening part 152, and by rotating the valve seat pressing member 103, the screw part 103c is threadedly engaged with the screw part 151a of the housing hole 151. When the valve seat pressing member 103 is further rotated, the valve seat pressing member 103 moves to the other side in the axial direction and stops when its tip comes into contact with the valve seat 101. Thus, the valve seat pressing member 103 is fixed to the cylinder block 38 at the position at which its tip has come into contact with the valve seat 101, and the valve seat 101 is also positioned and fixed to the cylinder block by the valve seat pressing member 103.

In this state, the valve seat 101 and the valve seat pressing member 103 come into contact with each other, and thereby the housing hole 101a of the valve seat 101 and the housing hole 103d of the valve seat pressing member 103 communicate with each other. The inner diameter of the housing hole 101a of the valve seat 101 and the inner diameter of the housing hole 103d of the valve seat pressing member 103 are the same diameter. That is, a disposing space part 115 is sectioned between the valve seat 101 and the valve seat pressing member 103 by the housing holes 101a and 103d, respectively. In the valve body 102, the ball 111 is positioned in the housing hole 101a of the valve seat 101, and the support 112 extends from the housing hole 101a of the valve seat 101 to the housing hole 103d of the valve seat pressing member 103. In the support 112, the outer diameter of the receiving part 112a is slightly smaller than the inner diameter of the housing hole 101a of the valve seat 101. In the support 112, a gap in which the compression coil spring 104 is interposed between the outer peripheral face of the rod part 112b and the inner peripheral face of the housing hole 103d of the valve seat pressing member 103 is ensured.

The compression coil spring 104 is disposed in the disposing space part 115, on an opposite side of the valve body 102 from the inflow port 113, that is, between the valve body 102 and the valve seat pressing member 103. In this state, the compression coil spring 104 is disposed in the gap between the rod part 112b of the support 112 and the tubular part 103a of the valve seat pressing member 103. In the compression coil spring 104, one end presses the step part 112d of the support 112 of the valve body 102, and the other end presses the inner face of the partition part 103b of the valve seat pressing member 103. Thus, the compression coil spring 104 biases the valve body 102 against the valve seat pressing member 103 toward the closing position, at which the ball 111 closes the inflow port 113.

The first communicating hole 105 is formed along the radial direction of the valve seat pressing member 103 and is provided spaced in the circumferential direction. The first communicating hole 105 causes the disposing space part 115 and the annular channel 155 to communicate with each other.

The housing hole 151 opens to the outside via the opening part 152. The opening part 152 has an inner diameter larger than the inner diameter of the housing hole 151. The closing member 153 has a cylindrical shape and is formed with a screw part 153a on its outer peripheral face. In the closing member 153, the screw part 153a is threadedly engaged with a screw part 152a formed on the inner peripheral face of the opening part 152. The closing member 153 is provided with a sealing member 122 formed in a ring shape at its end on one side in the axial direction (the horizontal direction HD) and seals by coming into contact with the end face of the housing hole 151 (the cylinder block 38). Thus, in the housing hole 151 and the opening part 152, a sealed space part 116 is sectioned between the valve seat pressing member 103 and the closing member 153.

### <Operation of Discharge Valve>

When the pressure in the compression chamber 43 (refer to FIG. 3) becomes high pressure, the high pressure acts on the ball 111 of the valve body 102, and the valve body 102 retracts against the biasing force of the compression coil spring 104, opening the inflow port 113. The liquid hydrogen in the compression chamber 43 then flows from the inflow hole 154 through the inflow port 113 into the discharge valve 42, is discharged from the discharge port 114 into the annular channel 155, and is discharged through the discharge hole to the outside of the cylinder block 38.

In this process, the valve body 102 retracts, compressing the compression coil spring 104, which reduces the volume of the disposing space part 115 and increases the pressure, and the liquid hydrogen remaining in the disposing space part 115 is about to flow through the outside of the valve body 102 to the discharge port 114. However, the discharge valve 42 of the present embodiment is provided with the first communicating hole 105 causing the disposing space part 115 and the annular channel 155 to communicate with each other. Thus, when the volume of the disposing space part 115 reduces and the pressure is about to increase, the liquid hydrogen remaining in the disposing space part 115 is pushed out of the disposing space part 115 through the first communicating hole 105 into the annular channel 155. Then, the flow of the liquid hydrogen from the disposing space part 115 to the discharge port 114 reduces, preventing hindrance to the retracting movement of the valve body 102, and also preventing damage to the valve body 102 due to cavitation erosion.

### [Second Embodiment]

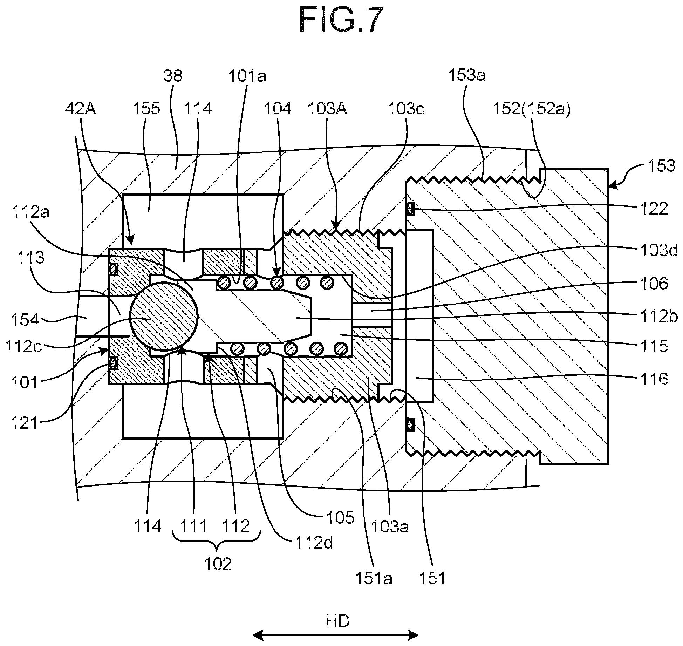

FIG. 7 is a sectional view of a discharge valve of a second embodiment. Components having the same functions as those of the first embodiment described above are denoted by the same symbols, and detailed descriptions thereof will be omitted.

As illustrated in FIG. 7, this discharge valve 42A is provided in the housing hole 151 formed in the cylinder block 38 and includes the valve seat 101, the valve body 102, a valve seat pressing member 103A, the compression coil spring 104, the first communicating hole (the first communicating part) 105, and a second communicating hole (a second communicating part) 106.

The second communicating hole 106 is formed along the axial direction in the partition part 103b of the valve seat pressing member 103A. The second communicating hole 106 causes the sealed space part 116 and the disposing space part 115 to communicate with each other. In the second embodiment, the second communicating hole 106 directly communicating the sealed space part 116 and the disposing space part 115 with each other is formed in the valve seat pressing member 103A.

When the pressure of liquid hydrogen acts on the ball 111 of the valve body 102, the valve body 102 retracts against the biasing force of the compression coil spring 104, opening the inflow port 113. The liquid hydrogen in the compression chamber 43 then flows from the inflow hole 154 through the inflow port 113 into the discharge valve 42, is discharged from the discharge port 114 into the annular channel 155, and is discharged through the discharge hole.

In this process, the retraction of the valve body 102 reduces the volume of the disposing space part 115, and the liquid hydrogen remaining in the disposing space part 115 is pushed out of the disposing space part 115 through the first communicating hole 105 into the annular channel 155. Thus, the flow of the liquid hydrogen from the disposing space part 115 to the discharge port 114 reduces, preventing hindrance to the retracting movement of the valve body 102, and also preventing damage to the valve body 102 due to cavitation erosion.

When the valve body 102 retracts and the pressure in the disposing space part 115 increases, the pressure in the disposing space part 115 becomes higher than the pressure in the sealed space part 116, and a load in the direction in which the valve seat pressing member 103A separates from the valve seat 101 acts. Then, the pressing force by the valve seat 101 pressing against the end face of the housing hole 151 (the cylinder block 38) via the sealing member 121 decreases, and the sealing performance of the disposing space part 115 may reduce. However, the discharge valve 42A of the present embodiment is provided with the second communicating hole 106 causing the disposing space part 115 and the sealed space part 116 to communicate with each other. Thus, even if the volume of the disposing space part 115 reduces, no pressure difference occurs between the disposing space part 115 and the sealed space part 116. No load in the direction in which the valve seat pressing member 103A separates from the valve seat 101 acts, and the sealing performance of the disposing space part 115 by the sealing member 121 is ensured.

### [Third Embodiment]

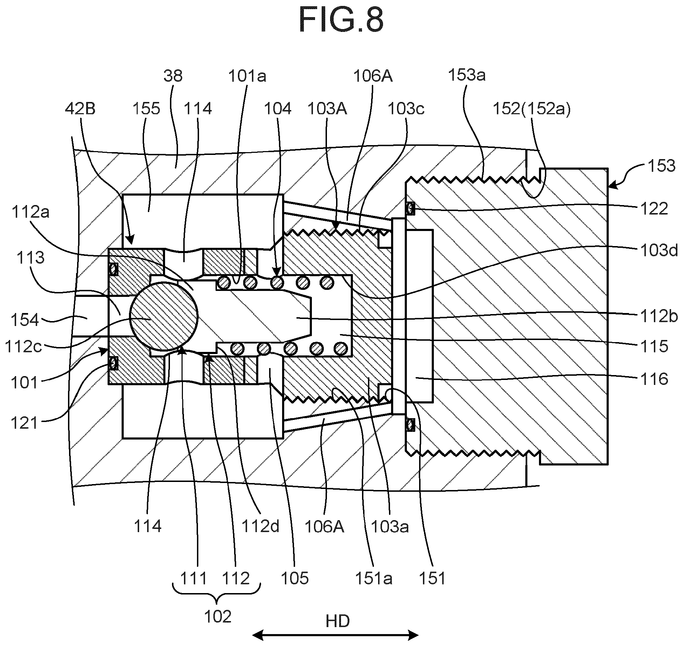

FIG. 8 is a sectional view of a discharge valve of a third embodiment. Components having the same functions as those of the first embodiment described above are denoted by the same symbols, and detailed descriptions thereof will be omitted.

As illustrated in FIG. 8, this discharge valve 42B is provided in the housing hole 151 formed in the cylinder block 38 and includes the valve seat 101, the valve body 102, the valve seat pressing member 103, the compression coil spring 104, the first communicating hole 105, and a second communicating hole (the second communicating part) 106A.

The second communicating hole 106A is formed in the cylinder block 38 outside the valve seat pressing member 103 in the radial direction, and a plurality of the holes are provided spaced apart from each other in the circumferential direction of the valve seat pressing member 103. The second communicating hole 106A causes the sealed space part 116 and the annular channel 155 (the discharge hole) to communicate with each other. In the third embodiment, the second communicating hole 106A causes the sealed space part 116 and the annular channel 155 to indirectly communicate with each other via the second communicating hole 106A.

When the pressure of liquid hydrogen acts on the ball 111 of the valve body 102, the valve body 102 retracts against the biasing force of the compression coil spring 104, opening the inflow port 113. The liquid hydrogen in the compression chamber 43 then flows from the inflow hole 154 through the inflow port 113 into the discharge valve 42, is discharged from the discharge port 114 into the annular channel 155, and is discharged through the discharge hole.

In this process, the retraction of the valve body 102 reduces the volume of the disposing space part 115, and the liquid hydrogen remaining in the disposing space part 115 is pushed out of the disposing space part 115 through the first communicating hole 105 into the annular channel 155. Thus, the flow of the liquid hydrogen from the disposing space part 115 to the discharge port 114 reduces, preventing hindrance to the retracting movement of the valve body 102, and also preventing damage to the valve body 102 due to cavitation erosion.

The valve body 102 retracts, and the annular channel 155 into which the liquid hydrogen in the disposing space part 115 has been pushed out through the first communicating hole 105 communicates with the sealed space part 116 by the second communicating hole 106A. Thus, no pressure difference occurs between the disposing space part 115 and the sealed space part 116. No load in the direction in which the valve seat pressing member 103 separates from the valve seat 101 acts, and the sealing performance of the disposing space part 115 by the sealing member 121 is ensured.

Further, when the discharge valve 42B is assembled to the housing hole 151 of the cylinder block 38, air remains inside the discharge valve 42B. In environments in which liquid hydrogen as a low-temperature fluid is used, the remaining air may become liquid or solid, and the occurrence of impurities may cause pump malfunction and damage. Thus, it is necessary to push out and discharge the remaining air by supplying inert gas or hydrogen gas to the inside of the discharge valve 42B. In this process, the annular channel 155 communicates with the sealed space part 116 by the second communicating hole 106A, and thus the inert gas or hydrogen gas can be supplied from the annular channel 155 through the second communicating hole 106A to the sealed space part 116 to discharge the air remaining in the sealed space part 116.

### [Fourth Embodiment]

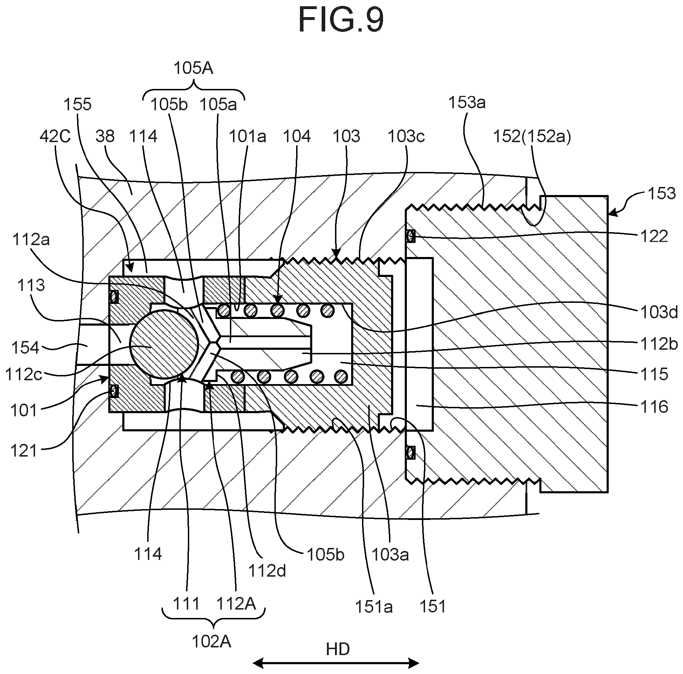

FIG. 9 is a sectional view of a discharge valve of a fourth embodiment. Components having the same functions as those of the first embodiment described above are denoted by the same symbols, and detailed descriptions thereof will be omitted.

As illustrated in FIG. 9, this discharge valve 42C is provided in the housing hole 151 formed in the cylinder block 38 and includes the valve seat 101, a valve body 102A, the valve seat pressing member 103, the compression coil spring 104, and a first communicating hole 105A.

The valve body 102A has the ball 111 and a support 112A. The support 112A has a cylindrical shape and has the receiving part 112a and the rod part 112b. The first communicating hole 105A has a first hole 105a and a second hole 105b. The first hole 105a is formed along the axial direction of the rod part 112b of the support 112A. The second hole 105b is formed along the radial direction of the receiving part 112a of the support 112A and a plurality of the holes are provided spaced apart from each other in the circumferential direction.

One end of the first hole 105a and one end of each of the second holes 105b communicate with each other inside the support 112A. The other end of the first hole 105a communicates with the disposing space part 115, and the other end of each of the second holes 105b communicates with the discharge port 114. Thus, the first communicating hole 105A causes the disposing space part 115 and the annular channel 155 to communicate with each other.

When the pressure of liquid hydrogen acts on the ball 111 of the valve body 102A, the valve body 102A retracts against the biasing force of the compression coil spring 104, opening the inflow port 113. The liquid hydrogen in the compression chamber 43 then flows from the inflow hole 154 through the inflow port 113 into the discharge valve 42, is discharged from the discharge port 114 into the annular channel 155, and is discharged through the discharge hole.

In this process, the retraction of the valve body 102A reduces the volume of the disposing space part 115, and the liquid hydrogen remaining in the disposing space part 115 is pushed out of the disposing space part 115 through the first communicating hole 105 into the annular channel 155. Thus, the flow of the liquid hydrogen from the disposing space part 115 to the discharge port 114 reduces, preventing hindrance to the retracting movement of the valve body 102A, and also preventing damage to the valve body 102A due to cavitation erosion.

### [Effects of the Present Embodiment]

A discharge valve according to a first aspect includes: the cylinder block (the casing) 38 with which the inflow hole 154 and the annular channel (a fluid discharge hole) 155 each communicate, the cylinder block 38 having the housing hole 151 communicating with the annular channel 155; the valve seat 101 disposed in the housing hole 151 and having the inflow port 113 communicating with the inflow hole 154 and the discharge port 114 communicating with the annular channel 155; the valve body 102 or 102A movably supported at the closing position to close the inflow port 113 and the opening position to open the inflow port 113 in the housing hole 151; and the first communicating hole (the first communicating part) 105 or 105A causing the disposing space part 115 on an opposite side of the valve body 102 or 102A in the housing hole 151 from the inflow port 113 and the annular channel 155 to communicate with each other.

According to the discharge valve according to the first aspect, when high-pressure liquid hydrogen acts on the valve body 102 or 102A, the valve body 102 or 102A retracts, and when the inflow port 113 is opened, the liquid hydrogen remaining in the disposing space part 115 flows through the first communicating hole 105 or 105A into the annular channel 155. Then, the flow of the liquid hydrogen from the disposing space part 115 to the discharge port 114 reduces, preventing hindrance to the retracting movement of the valve body 102, and also preventing damage to the valve body 102 due to cavitation erosion. Consequently, the operability of the valve body 102 or 102A can be improved, and damage to the valve body 102 or 102A can be prevented.

A discharge valve according to a second aspect has the compression coil spring (the biasing member) 104 disposed in the disposing space part 115 and configured to bias the valve body 102 or 102A to the closing position. With this configuration, the operability of the valve body 102 or 102A can be improved.

A discharge valve according to a third aspect is the discharge valve according to the first aspect, in which the valve seat 101 is positioned at the cylinder block 38 by the valve seat pressing member 103 or 103A sectioning the disposing space part 115 and fixed to the housing hole 151, and the compression coil spring 104 is disposed between the valve body 102 or 102A and the valve seat pressing member 103 or 103A. With this configuration, the valve seat 101 can be appropriately fixed to the cylinder block 38 by the valve seat pressing member 103 or 103A.

A discharge valve according to a fourth aspect is the discharge valve according to the second aspect, in which the first communicating hole 105 is formed in the valve seat pressing member 103 to cause the disposing space part 115 and the annular channel 155 to communicate with each other. With this configuration, by forming the first communicating hole 105 in the valve seat pressing member 103, the structure can be simplified.

A discharge valve according to a fifth aspect is the discharge valve according to the second aspect, in which the first communicating hole 105A is formed in the valve body 102A to cause the disposing space part 115 and the annular channel 155 to communicate with each other. With this configuration, by forming the first communicating hole 105A in the valve body 102A, the amount of liquid hydrogen flowing in between the valve seat 101 and the valve body 102A can be reduced, and the operability of the valve body 102A can be improved.

A discharge valve according to a sixth aspect is the discharge valve according to any one of the first aspect to the fourth aspect, in which the cylinder block 38 is provided with the opening part 152 opening the housing space part 15 to the outside, the sealed space part 116 is formed between the valve seat pressing member 103 or 103A and the closing member 153 when the opening part 152 is closed by the closing member 153 via the sealing member 122 from the outside, and the second communicating hole (the second communicating part) 106 or 106A causing the sealed space part 116 and the disposing space part 115 to communicate with each other is provided. With this configuration, even if the valve body 102 or 102A retracts and the volume of the disposing space part 115 reduces, no pressure difference occurs between the disposing space part 115 and the sealed space part **116.** Consequently, no load in the direction in which the valve seat pressing member 103 or 103A separates from the valve seat 101 acts, and high sealing performance of the disposing space part 115 by the sealing member 121 can be ensured.

A discharge valve according to a seventh aspect is the discharge valve according to the fifth aspect, in which the second communicating hole 106 is formed in the valve seat pressing member 103A to cause the sealed space part 116 and the disposing space part 115 to communicate with each other. With this configuration, only required is to form the second communicating hole 106 in the valve seat pressing member 103A, and the structure can be simplified.

A discharge valve according to an eighth aspect is the discharge valve according to the fifth aspect, in which the second communicating hole 106A is formed in the cylinder block 38 to cause the sealed space part 116 and the annular channel 155 to communicate with each other. With this configuration, there is no need to change the valve seat 101, the valve body 102, and the valve seat pressing member 103, and thus the discharge valve 42C itself can be simplified.

A pressure boosting pump according to a ninth aspect includes the suction valve 41 configured to cause liquid hydrogen (a low-temperature fluid) to be sucked into the compression chamber 43, the piston 37 configured to compress the liquid hydrogen sucked from the suction valve 41 into the compression chamber 43, and the discharge valve 42, 42A, 42B, or 42C configured to cause the liquid hydrogen compressed by the piston 37 to be discharged. With this configuration, the flow of the liquid hydrogen from the disposing space part 115 to the discharge port 114 reduces at the discharge valve 42, 42A, 42B, or 42C, preventing hindrance to the retracting movement of the valve body 102, and also preventing damage to the valve body 102 due to cavitation erosion. Consequently, the operability of the valve body 102 or 102A can be improved, and damage to the valve body 102 or 102A can be prevented.

A hydrogen supply system according to a tenth aspect includes the compression device 21 having the pressure boosting pump 32 of the eighth aspect configured to compress liquid hydrogen as a low-temperature fluid, the evaporation device 22 configured to vaporize the liquid hydrogen compressed by the compression device 21, and the dispenser 23 configured to supply hydrogen gas vaporized by the evaporation device 22. With this configuration, the flow of the liquid hydrogen from the disposing space part 115 to the discharge port 114 reduces at the discharge valve 42, 42A, 42B, or 42C, preventing hindrance to the retracting movement of the valve body 102, and also preventing damage to the valve body 102 due to cavitation erosion. Consequently, the operability of the valve body 102 or 102A can be improved, and damage to the valve body 102 or 102A can be prevented.

In the embodiments described above, the discharge valve 42 has been described as including the valve seat 101, the valve body 102, the valve seat pressing member 103, and the compression coil spring 104, but the valve seat pressing member 103 and the compression coil spring 104 can be removed. For example, the cylinder block 38 as the casing may include the function of the valve seat pressing member 103. In addition, the inflow port 113 can be closed by biasing the valve body 102 through the pressure difference between the compression chamber 43 and the discharge hole as a discharge destination, that is, the pressure in the annular channel 155.

### Reference Signs List

- 10: HYDROGEN SUPPLY SYSTEM
- 11: CONTAINER
- 12: VEHICLE
- 21: COMPRESSION DEVICE
- 22: EVAPORATION DEVICE
- 23: DISPENSER
- 31: DRIVE MOTOR
- 32: PRESSURE BOOSTING PUMP
- 33: REDUCER
- 34: CRANK MECHANISM
- 35: CROSSHEAD
- 36: PISTON ROD
- 37: PISTON
- 38: CYLINDER BLOCK (CASING)
- 39: VESSEL
- 41: SUCTION VALVE
- 42, 42A, 42B, 42C: DISCHARGE VALVE
- 43: COMPRESSION CHAMBER
- 51: FITTING HOLE
- 52: RECESS
- 53: COMMUNICATING HOLE
- 61: VALVE CASING
- 62: FIRST VALVE BODY
- 63: SECOND VALVE BODY
- 64: PRESSING MEMBER
- 71: SPACE PART
- 72: THROUGH HOLE
- 73: SUCTION HOLE
- 74: DISCHARGE HOLE
- 75: NUT
- 76: SPRING RECEIVING MEMBER
- 77: COMPRESSION COIL SPRING
- 81, 82: SEALING MEMBER
- 91: FASTENING BOLT
- 92: SUCTION TUBE
- 101: VALVE SEAT
- 102: VALVE BODY
- 103: VALVE SEAT PRESSING MEMBER
- 104: COMPRESSION COIL SPRING (BIASING MEMBER)
- 105, 105A: FIRST COMMUNICATING HOLE (FIRST COMMUNICATING PART)
- 106, 106A: SECOND COMMUNICATING HOLE (SECOND COMMUNICATING PART)
- 111: BALL
- 112, 112A: SUPPORT
- 113: INFLOW PORT
- 114: DISCHARGE PORT
- 115: DISPOSING SPACE PART
- 116: SEALED SPACE PART
- 121, 122: SEALING MEMBER
- 151: HOUSING HOLE (HOUSING SPACE PART)
- 152: OPENING PART
- 153: CLOSING MEMBER
- 154: INFLOW HOLE (FLUID INFLOW HOLE)
- 155: ANNULAR CHANNEL (FLUID DISCHARGE HOLE)

## Claims

1. A discharge valve (42,42A,42B,42C) comprising:
a casing (38) with which a fluid inflow hole (154) and a fluid discharge hole (155) each communicate, the casing having a housing space part (151) communicating with the fluid discharge hole;
a valve seat (101) disposed in the housing space part and having an inflow port (113) communicating with the fluid inflow hole and a discharge port (114) communicating with the fluid discharge hole;
a valve body (102,102A) movably supported at a closing position to close the inflow port and an opening position to open the inflow port in the housing space part;
a valve seat pressing member (103,103A) that positions the valve seat (101) within the casing while partitioning a positioning space for the valve body within the housing space part (151);
a first communicating part (105,105A) causing a disposing space part (115) on an opposite side of the valve body in the housing space part from the inflow port and the fluid discharge hole to communicate with each other; **characterized in that** the casing (38) is provided with an opening part (152) opening the housing space part to outside,
a sealed space part (116) is formed between the valve seat pressing member (103,103A) and the closing member (153) when the opening part is closed by a closing member via a sealing member from outside, and **in that**
a second communicating part (106,106A) causing the sealed space part and the disposing space part to communicate with each other is provided.

2. The discharge valve according to claim 1, further comprising a biasing member (104) disposed in the disposing space part (115) and configured to bias the valve body (102) to the closing position.

3. The discharge valve according to claim 2, wherein
the biasing member (104) is a compression spring disposed between the valve body and the valve seat pressing member.

4. The discharge valve according to claim 3, wherein the first communicating part (105) is a first communicating hole formed in the valve seat pressing member (103) to cause the disposing space part and the fluid discharge hole to communicate with each other.

5. The discharge valve according to claim 3, wherein the first communicating part is a first communicating hole (105A) formed in the valve body (102A) to cause the disposing space part and the discharge port to communicate with each other.

6. The discharge valve according to any one of claims 1 to 5, wherein the second communicating part is a second communicating hole (106) formed in the valve seat pressing member (103A) to cause the sealed space part and the disposing space part to communicate with each other.

7. The discharge valve according to any one of claims 1 to 5, wherein the second communicating part is a second communicating hole (106A) formed in the casing (38) to cause the sealed space part and the fluid discharge hole to communicate with each other.

8. A pressure boosting pump (32) comprising:
a suction valve (41) configured to cause a low-temperature fluid to be sucked into a compression chamber (43) ;
a piston (37) configured to compress the low-temperature fluid sucked from the suction valve into the compression chamber; and
the discharge valve (42,42A,42B,42C) according to any of claims 1 to 7, configured to cause the low-temperature fluid compressed by the piston to be discharged.

9. A hydrogen supply system comprising:
a compression device (21) having the pressure boosting pump (32) according to claim 8 configured to compress liquid hydrogen as a low-temperature fluid;
an evaporation device (22) configured to vaporize the liquid hydrogen compressed by the compression device; and
a dispenser (23) configured to supply hydrogen gas vaporized by the evaporation device.

## Patentansprüche

1. Ablassventil (42, 42A, 42B, 42C), umfassend:
ein Gehäuse (38), mit dem jeweils ein Fluidzulaufloch (154) und ein Fluidablassloch (155) jeweils in Verbindung sind, wobei das Gehäuse einen Aufnahmeraumteil (151) aufweist, der mit dem Fluidablassloch in Verbindung ist;
einen Ventilsitz (101), der im Aufnahmeraumteil angeordnet ist und einen Zulaufanschluss (113), der mit der Fluidzulaufloch in Verbindung ist, und einen Ablassanschluss (114), der mit der Fluidablassloch in Verbindung ist;
einen Ventilkörper (102, 102A), der bewegbar in einer Schließstellung zum Schließen des Zulaufanschlusses und in einer Öffnungsstellung zum Öffnen des Zulaufanschlusses in dem Aufnahmeraumteil getragen wird;
ein Ventilsitzpresselement (103, 103A), das den Ventilsitz (101) innerhalb des Gehäuses positioniert, während es einen Positionierungsraum für den Ventilkörper innerhalb des Aufnahmeraumteils (151) abgrenzt;
einen ersten Verbindungsteil (105, 105A), der einen Anordnungsraumteil (115) auf der dem Zulaufanschluss und der Fluidablassloch abgewandten Seite des Ventilkörpers in dem Anordnungsraumteil miteinander in Verbindung bringt;
**dadurch gekennzeichnet, dass** das Gehäuse (38) mit einem Öffnungsteil (152) versehen ist, der den Aufnahmeraumteil nach außen öffnet,
ein abgedichteter Raumteil (116) zwischen dem Ventilsitzpresselement (103, 103A) und dem Verschlusselement (153) gebildet wird, wenn der Öffnungsteil von außen durch ein Verschlusselement über ein Dichtelement geschlossen wird, und dass
ein zweiter Verbindungsteil (106, 106A) bereitgestellt ist, der den abgedichteten Raumteil und den Anordnungsraumteil miteinander in Verbindung bringt.

2. Ablassventil nach Anspruch 1, ferner umfassend ein Vorspannelement (104), das in dem Anordnungsraumteil (115) angeordnet ist und konfiguriert ist, um den Ventilkörper (102) in die Schließstellung vorzuspannen.

3. Ablassventil nach Anspruch 2, wobei
das Vorspannelement (104) eine Druckfeder ist, die zwischen dem Ventilkörper und dem Ventilsitzpresselement angeordnet ist.

4. Ablassventil nach Anspruch 3, wobei der erste Verbindungsteil (105) ein erstes Verbindungsloch ist, das in dem Ventilsitzpresselement (103) gebildet ist, um den Anordnungsraumteil und das Fluidablassloch miteinander in Verbindung zu bringen.

5. Ablassventil nach Anspruch 3, wobei der erste Verbindungsteil ein erstes Verbindungsloch (105A) ist, das in dem Ventilkörper (102A) gebildet ist, um den Anordnungsraumteil und den Ablassanschluss miteinander in Verbindung zu bringen.

6. Ablassventil nach einem der Ansprüche 1 bis 5, wobei der zweite Verbindungsteil ein zweites Verbindungsloch (106) ist, das in dem Ventilsitzpresselement (103A) gebildet ist, um den abgedichteten Raumteil und den Anordnungsraumteil miteinander in Verbindung zu bringen.

7. Ablassventil nach einem der Ansprüche 1 bis 5, wobei der zweite Verbindungsteil ein zweites Verbindungsloch (106A) ist, das in dem Gehäuse (38) gebildet ist, um den abgedichteten Raumteil und das Fluidablassloch miteinander in Verbindung zu bringen.

8. Druckerhöhungspumpe (32), umfassend:
ein Saugventil (41), das konfiguriert ist, um zu bewirken, dass ein Tieftemperaturfluid in eine Verdichtungskammer (43) angesaugt wird;
einen Kolben (37), der konfiguriert ist, um das von dem Saugventil in die Verdichtungskammer angesaugte Tieftemperaturfluid zu verdichten; und
das Ablassventil (42, 42A, 42B, 42C) nach einem der Ansprüche 1 bis 7, das konfiguriert ist, um das durch den Kolben verdichtete Tieftemperaturfluid abzulassen.

9. Wasserstoffzufuhrsystem, umfassend:
eine Verdichtungsvorrichtung (21), die die Druckerhöhungspumpe (32) nach Anspruch 8 aufweist, die konfiguriert ist, um Flüssigwasserstoff als Tieftemperaturfluid zu verdichten;
eine Verdampfungsvorrichtung (22), die konfiguriert ist, um den durch die Verdichtungsvorrichtung komprimierten Flüssigwasserstoff zu verdampfen; und
einen Dispenser (23), der konfiguriert ist, um durch die Verdampfungsvorrichtung verdampftes Wasserstoffgas zuzuführen.

## Revendications

1. Soupape de décharge (42, 42A, 42B, 42C) comprenant :
un boîtier (38) avec lequel un trou d'entrée de fluide (154) et un trou de décharge de fluide (155) sont chacun en communication, le boîtier ayant une partie d'espace de logement (151) communiquant avec le trou de décharge de fluide ;
un siège de soupape (101) disposé dans la partie d'espace de logement et ayant un orifice d'entrée (113) communiquant avec le trou d'entrée de fluide et un orifice de décharge (114) communiquant avec le trou de décharge de fluide ;
un corps de soupape (102, 102A) supporté de manière mobile dans une position de fermeture pour fermer l'orifice d'entrée et dans une position d'ouverture pour ouvrir l'orifice d'entrée dans la partie d'espace de logement ;
un élément de pression de siège de soupape (103, 103A) qui positionne le siège de soupape (101) à l'intérieur du boîtier tout en partitionnant un espace de positionnement pour le corps de soupape à l'intérieur de la partie d'espace de logement (151) ;
une première partie de communication (105, 105A) amenant une partie d'espace de disposition (115) située sur un côté opposé du corps de soupape dans la partie d'espace de logement par rapport à l'orifice d'entrée et au trou de décharge de fluide à communiquer entre elles ; **caractérisée en ce que** le boîtier (38) est pourvu d'une partie d'ouverture (152) ouvrant la partie d'espace de logement vers l'extérieur,
une partie d'espace scellée (116) est formée entre l'élément de pression de siège de soupape (103, 103A) et l'élément de fermeture (153) lorsque la partie d'ouverture est fermée par un élément de fermeture via un élément d'étanchéité depuis l'extérieur, et **en ce que** :
une deuxième partie de communication (106, 106A) amenant la partie d'espace scellée et la partie d'espace de disposition à communiquer entre elles, est prévue.

2. Soupape de décharge selon la revendication 1, comprenant en outre un élément de sollicitation (104) disposé dans la partie d'espace de disposition (115) et configuré pour solliciter le corps de soupape (102) vers la position de fermeture.

3. Soupape de décharge selon la revendication 2, dans laquelle
l'élément de sollicitation (104) est un ressort de compression disposé entre le corps de soupape et l'élément de pression de siège de soupape.

4. Soupape de décharge selon la revendication 3, dans laquelle la première partie de communication (105) est un premier trou de communication formé dans l'élément de pression de siège de soupape (103) pour amener la partie d'espace de disposition et le trou de décharge de fluide à communiquer entre eux.

5. Soupape de décharge selon la revendication 3, dans laquelle la première partie de communication est un premier trou de communication (105A) formé dans le corps de soupape (102A) pour amener la partie d'espace de disposition et l'orifice de décharge à communiquer entre eux.

6. Soupape de décharge selon l'une quelconque des revendications 1 à 5, dans laquelle la deuxième partie de communication est un deuxième trou de communication (106) formé dans l'élément de pression de siège de soupape (103A) pour amener la partie d'espace scellée et la partie d'espace de disposition à communiquer entre elles.

7. Soupape de décharge selon l'une quelconque des revendications 1 à 5, dans laquelle la deuxième partie de communication est un deuxième trou de communication (106A) formé dans le boîtier (38) pour amener la partie d'espace scellée et le trou de décharge de fluide à communiquer entre eux.

8. Pompe de surpression (32) comprenant :
une soupape d'aspiration (41) configurée pour permettre l'aspiration d'un fluide basse température dans une chambre de compression (43) ;
un piston (37) configuré pour comprimer le fluide basse température aspiré depuis la soupape d'aspiration dans la chambre de compression ; et
la soupape de décharge (42, 42A, 42B, 42C) selon l'une quelconque des revendications 1 à 7, configurée pour permettre la décharge du fluide basse température comprimé par le piston.

9. Système d'alimentation en hydrogène comprenant :
un dispositif de compression (21) ayant la pompe de surpression (32) selon la revendication 8, configuré pour comprimer de l'hydrogène liquide en tant que fluide basse température ;
un dispositif d'évaporation (22) configuré pour vaporiser l'hydrogène liquide comprimé par le dispositif de compression ; et
un distributeur (23) configuré pour fournir le gaz hydrogène vaporisé par le dispositif d'évaporation.
